# EUROPÄISCHE PATENTSCHRIFT

(11) **EP 0 918 806 B1**
(45) Veröffentlichungstag und Bekanntmachung des Hinweises auf die Patenterteilung: **08.11.2000**
(21) Anmeldenummer: 97944765.3
(22) Anmeldetag: 18.08.1997
(51) Int. Cl.: C08F 212/04, C08F 236/10, C08F 279/02, C08F 297/04

(54) **VERFAHREN ZUR HERSTELLUNG VON DIENPOLYMERISATLÖSUNGEN IN VINYLAROMATISCHEN MONOMEREN**
PROCESS FOR PRODUCING DIENE POLYMER SOLUTIONS IN VINYL AROMATIC MONOMERS
PROCEDE POUR LA PREPARATION DE SOLUTIONS POLYMERES DIENIQUES DANS DES MONOMERES AROMATIQUES VINYLIQUES

(30) Priorität: 19.08.1996 DE 19633273; 19.08.1996 DE 19633272; 22.05.1997 DE 19721403
(43) Veröffentlichungstag der Anmeldung: 02.06.1999
(73) Patentinhaber: BASF AKTIENGESELLSCHAFT, 67056 Ludwigshafen (DE)
(72) Erfinder: LÄTSCH, Stefan, D-67098 Bad Dürkheim (DE); FISCHER, Wolfgang, D-69190 Walldorf (DE); GAUSEPOHL, Hermann, D-67112 Mutterstadt (DE); WARZELHAN, Volker, D-67273 Weisenheim (DE); SCHADE, Christian, D-67061 Ludwigshafen (DE)
(86) Internationale Anmeldenummer: EP9704498
(87) Internationale Veröffentlichungsnummer: WO9807766

(56) Entgegenhaltungen:
- EP-A- 0 304 088
- US-A- 3 278 508
- US-A- 3 826 790

## Beschreibung

Die vorliegende Erfindung betrifft ein Verfahren zur anionischen Polymerisation von Dienen oder Copolymerisation von Dienen und vinylaromatischen Monomeren in einem vinylaromatischen Monomer oder Monomerengemisch, zu Homopolydienen oder Copolymeren oder gemischten Homopolydienen und Copolymeren.

Weiterhin betrifft die Erfindung eine Dienpolymerisatlösung, deren Verwendung zur Herstellung von vinylaromatische Monomeren enthaltende Formmassen sowie ein kontinuierliches Verfahren zur Herstellung von schlagzäh modifizierten, thermoplastischen Formmassen.

Es ist allgemein bekannt, daß die anionische Polymerisation zwar vollständig, d.h. bis zum vollständigen Umsatz, aber auch sehr schnell verläuft. Die Umsatzgeschwindigkeit könnte, abgesehen von der Wahl einer möglichst niedrigen Temperatur, nur dadurch verringert werden, daß die Konzentration des Polymerisationsauslösers geringer gewählt wird; auf diese Weise würden aber nur wenige, sehr lange Kettenmoleküle gebildet werden. Wegen der beträchtlichen Wärmeentwicklung und der Schwierigkeit, die Wärme aus einer viskosen Lösung abzuführen, ist, die Begrenzung der Umsetzungstemperatur wenig wirkungsvoll.

Eine zu hohe Reaktionstemperatur hat vor allem bei der Block-copolymerisation besonders nachteilige Folgen, weil durch thermischen Abbruch die Bildung einheitlicher Blockcopolymerer gestört wird und, falls nach der Polymerisation eine Kopplungsreaktion beabsichtigt ist, die sog. Kopplungsausbeute ungünstig niedrig wäre.

Somit muß die Temperatur durch entsprechende Verdünnung der Monomeren beherrscht werden, wodurch aber der Bedarf an Reaktionsraum unnötig groß wird, d.h. die anionische Polymerisation läßt sich trotz der erreichbaren hohen Reaktionsgeschwindigkeit nur mit verhältnismäßig geringer Raum-Zeit-Ausbeute betreiben.

Zur Herstellung von schlagzähem Polystyrol sind verschiedene kontinuierliche und diskontinuierliche Verfahren in Lösung oder Suspension bekannt. Bei diesen Verfahren wird ein Kautschuk, üblicherweise Polybutadien, in monomerem Styrol gelöst, welches in einer Vorreaktion bis zu einem Umsatz von ca. 30% polymerisiert wurde. Durch die Bildung von Polystyrol und gleichzeitige Abnahme des monomeren Styrols kommt es zu einem Wechsel in der Phasenkohärenz. Während diesem als "Phaseninversion" bekannten Vorgang treten auch Pfropfungsreaktionen am Polybutadien auf, die zusammen mit der Rührintensität und der Viskosität die Einstellung der dispersen Weichphase beeinflussen. In der anschließenden Hauptpolymersisation wird die Polystyrolmatrix aufgebaut. Derartige in verschiedenen Reaktorarten durchgeführte Verfahren sind beispielsweise in A. Echte, Handbuch der technischen Polymerchemie, VCH Verlagsgesellschaft Weinheim 1993, Seiten 484 - 489 und den US-Patentschriften US 2 727 884 und 3 903 202 beschrieben.

Bei diesen Verfahren muß der separat hergestellte Kautschuk in aufwendiger Weise zerkleinert und gelöst werden und die so erhaltene Polybutadienkautschuklösung in Styrol vor der Polymerisation zur Entfernung von Gelteilchen filtriert werden.

Es wurde daher verschiedentlich versucht, die benötigte Kautschuklösung in Styrol direkt durch anionische Polymerisation von Butadien oder Butadien/Styrol in unpolaren Lösungsmitteln wie beispielsweise Cyclohexan oder Ethylbenzol und nachträgliche Zugabe von Styrol (GB 1 013 205, EP-A-0 334 715 und US 4 153 647) oder durch unvollständigen Umsatz von Butadien in Styrol (EP-A 0 059 231) herzustellen. Der so hergestellte Blockkautschuk muß entweder durch Fällung gereinigt oder aber das Lösungsmittel sowie andere flüchtige Stoffe, insbesondere monomeres Butadien abdestilliert werden. Aufgrund der hohen Lösungsviskosität können zudem nur relativ verdünnte Kautschuklösungen gehandhabt werden, was einen hohen Lösemittelverbrauch, Reinigungs- und Energieaufwand bedeutet.

Die EP-A 0 304 088 beschreibt ein Verfahren zur selektiven Polymerisation von konjugierten Dienen in einer Mischung aus Dienen und vinylaromatischen Verbindungen. Die verwendeten Katalysatoren polymerisieren die vinylaromatische Verbindung praktisch nicht.

Die US 3 264 374 beschreibt die Herstellung von Polybutadien in Styrol. Die dort ohne Angabe des Maßstabes angeführten Versuche können aber auf Grund der oben angeführten Probleme der Wärmeabfuhr nicht in technisch relevantem Maßstab beherrscht werden. Zudem sind die Viskositäten bei den relativ niedrigen Reaktionstemperaturen sehr hoch.

Über den Einfluß von Lewissäuren und Lewisbasen auf die Reaktionsgeschwindigkeit bei der anionischen Polymerisation wurde in Welch, Journal of the American Chemical Society, Vol 82 (1960), Seite 6000 - 6005 berichtet. So wurde gefunden, daß geringe Mengen von Lewisbasen wie Ether und Amine die durch n-Butyllithium initiierte Polymerisation von Styrol beschleunigen, wohingegen Lewissäuren wie Zink- und Aluminiumalkyle die Polymerisationsgeschwindigkeit zu reduzieren vermögen. Auch Hsieh und Wang berichten in Macromolecules, Vol 19 (1966), Seite 299 bis 304 über die polymerisationsgeschwindigkeitserniedrigende Wirkung von Dibutylmagnesium durch Komplexbildung mit dem Alkyllithiuminitiator bzw. der lebenden Polymerkette ohne die Stereochemie zu beeinflussen.

Aus der US-Patentschrift 3 716 495 sind Initatorzusammensetzungen für die Polymerisation von konjugierten Dienen und Vinylarmomaten bekannt, bei denen eine effektivere Nutzung des Lithiumalkyls als Initator durch den Zusatz eines Metallalkyls wie beispielsweise Diethylzink und polare Verbindungen wie Ether oder Amine erreicht wird. Aufgrund der notwendigen hohen Lösungsmittelmengen, relativ niedrigen Temperaturen und langen Reaktionszeiten im Bereich von einigen Stunden sind die Raum-Zeit-Ausbeuten entsprechend niedrig.

In US 3,826,790 wird ein Verfahren zur Polymerisation von konjugierten Dienen und gegebenenfalls monovinylaromatischen Kohlenwasserstoffen in Lösung zu Polymeren mit erhöhtem cis 1,4-Gehalt. Der hierfür eingesetzte Initiator enthält eine Lithiumalkylverbindungen und eine Trihydrocarbylborverbindung.

Aufgabe der vorliegenden Erfindung war es daher, ein Verfahren zur anionischen Polymerisation von Dienen und vinylaromatischen Monomeren zu finden, das sich bei hoher Monomerkonzentration durch besonders wirtschaftlichen Betrieb auszeichnet und erlaubt, dienmonomerenarme Dienpolymerisatlösungen in vinylaromatischen Monomeren für die Weiterverarbeitung zu Formmassen herzustellen. Bei dem Verfahren sollten vorwiegend monomere Einsatzstoffe verwendet werden und hohe Raum-Zeit-Ausbeuten ermöglicht werden. Desweiteren sollte eine sichere Steuerung der Polymerisationsgeschwindigkeit und damit der Temperaturführung ermöglicht werden. Außerdem sollte die Erfindung ein kontinuierliches Verfahren zur Herstellung von schlagzäh modifizierten Formmassen mit niedrigem Restmonomerengehalt bereitstellen.

Demgemäß wurde ein Verfahren zur anionischen Polymerisation von Dienen oder Copolymerisation von Dienen und vinylaromatischen Monomeren in einem vinylaromatischen Monomer oder Monomerengemisch zu Homopolydienen oder Copolymeren oder gemischten Homopolydienen und Copolymeren gefunden, wobei man in Gegenwart eines Metallalkyls oder -aryls eines mindestens zweiwertig auftretenden Elements ohne Zusatz von Lewisbasen polymerisiert.

Desweiteren wurde eine Dienpolymerisatlösung, deren Verwendung zur Herstellung von Formmassen aus vinylaromatischen Monomeren, insbesondere von schlagzähem Polystyrol, Acrylnitril-Butadien-Styrol-Polymeren und Methylmethacrylat-Butadien-Styrol-Copolymeren sowie ein Verfahren zur kontinuierlichen Herstellung von schlagzäh modifizierten, thermoplastischen Formmassen gefunden, die eine Weichphase aus einem Dienpolymerisat dispers verteilt in einer vinylaromatischen Hartmatrix enthalten, wobei man
- in einer ersten Reaktionszone das für die Bildung der Weichphase erforderliche Dienpolymerisat wie eingangs beschrieben polymerisiert,
- das erhaltene Dienpolymerisat unmittelbar oder nach Zusatz eines Abbruch- oder Kopplungsmittels einer zweiten Reaktionszone zugeführt wird, in der gegebenenfalls unter Zugabe weiterer Vinylmonomeren in einer Menge, die zur Erreichung der Phaseninversion ausreicht, und gegebenenfalls weiteren Initiatoren und/oder Lösungsmittel bis zur Phaseninversion anionisch oder radikalisch polymerisiert wird und
- in einer dritten Reaktionszone mit soviel vinylaromatischem Monomer, als zur Bildung der schlagzäh modifizierten thermoplastischen Formmasse erforderlich ist, die polymerisation anionisch oder radikalisch zu Ende führt.

Das Verfahren kann auf die üblichen anionisch polymerisierbaren Dien-Monomeren angewendet werden, die die üblichen Reinheitsanforderungen, wie vor allem Abwesenheit von polaren Stoffen, erfüllen.

Bevorzugte Monomere sind Butadien, Isopren, 2,3-Dimethylbutadien, 1,3-Pentadien, 1,3-Hexadien oder Piperylen oder deren Mischungen.

Als vinylaromatische Monomere sind beispielsweise Styrol, α-Methylstyrol, p-Methylstyrol, Ethylstyrol, tert.-Butylstyrol, Vinyltoluol, Vinylnaphthalin oder 1,1-Diphenylethylen oder Mischungen davon geeignet. Diese können als Comonomere sowie als "Lösungsmittel" oder "Lösungsmittelkomponente" für das erfindungsgemäße Verfahren eingesetzt werden. Besonders bevorzugt werden als "Lösungsmittel" oder "Lösungsmittelkomponente" Styrol.

Das Dien wird im allgemeinen in Mengen von 2 - 70 Gew.-%, bevorzugt 5 - 35 Gew.-%, besonders bevorzugt 15 - 25 Gew.-%, bezogen auf die Summe aller Monomeren, eingesetzt.

Aus praktischen Gründen kann man eine geringere Menge eines weiteren Lösungsmittels verwenden. Als weiteres Lösungsmittel eignen sich die für die anionische Polymerisation üblichen aliphatischen, cycloaliphatischen oder aromatischen Kohlenwasserstoffe mit 4 bis 12 Kohlenstoffatomen wie Pentan, Hexan, Heptan, Cyclohexan, Methylcyclohexan, Iso-Oktan, Benzol, Alkylbenzole wie Toluol, Xylol, Ethylbenzol oder Dekalin oder geeignete Gemische. Das Lösungsmittel sollte natürlich die verfahrenstypisch erforderliche hohe Reinheit aufweisen. Zur Abtrennung protonenaktiver Substanzen können sie beispielsweise über Aluminiumoxid oder Molekularsieb getrocknet und vor Verwendung destilliert werden. Vorzugsweise wird das Lösungsmittel aus dem Verfahren nach Kondensation und der genannten Reinigung wiederverwendet. Wird ein weiteres Lösungsmittel verwendet, so liegt in der Regel die zugesetzte Menge unter 40, bevorzugt unter 20 und ganz besonders bevorzugt unter 10 Vol%, bezogen auf das vinylaromatische Monomer oder Monomerengemisch.

Als Initiatoren werden die für die anionische Polymerisation üblichen mono-, bi- oder multifunktionellen Alkalimetallalkyle oder -aryle eingesetzt. Zweckmäßigerweise werden lithiumorganische Verbindungen eingesetzt wie Ethyl-, Propyl-, Isopropyl-, n-Butyl-, sec-Butyl-, tert.-Butyl-, Phenyl-, Hexyldiphenyl-, Hexamethylendi- Butadienyl-, Isoprenyl-, Polystyryllithium oder die multifunktionellen lithiumorganischen Verbindungen 1,4-Dilithiobutan, 1,4-dilithio-2-buten oder 1,4-Dilithiobenzol. Die benötigte Initiatormenge liegt in der Regel im Bereich von 0,002 bis 5 Molprozent, bezogen auf die zu polymerisierende Monomermenge.

Als Metallalkyl oder -aryl eines mindestens zweiwertigen Elements werden zweckmäßig Verbindungen der allgemeinen Formel (I)

RₙM (I)

einsetzt, wobei
- M: ein Element der zweiten oder dritten Hauptgruppe oder der zweiten Nebengruppe des Periodensystems,
- R: Wasserstoff, Halogen, C₁-C₂₀-Alkyl oder C₆-C₂₀-Aryl, wobei Reste R gleich oder verschieden sein können, und
- n: 2 oder 3, entsprechend der Wertigkeit des Elementes M bedeuten.

Bevorzugt steht M für die Elemente Be, Mg, Ca, Sr, Ba, B, Al, Ga, In, Tl, Zn, Cd, Hg, besonders bevorzugt Magnesium, Aluminium, Bor und Zink. Als Reste R kommen insbesondere Wasserstoff, Halogen und C₁-C₁₂-Alkyl, beispielsweise Ethyl-, Propyl-, n-, i-, t-Butyl-, Octyl- oder Dodecyl-, sowie C₆ bis C₁₀-Aryl, beispielsweise Phenyl in Betracht. Ganz besonders bevorzugt werden die als Handelsprodukte verfügbaren Diethylzink, Butylethylmagnesium, Dibutylmagnesium, Dihexylmagnesium, Butyloctylmagnesium, Triisobutylaluminium, Trihexylaluminium, Triethylaluminium, Trimethylaluminium, Diethylaluminiumchlorid und Diethyialuminiumhydrid eingesetzt. Selbstverständlich können auch Mischungen von Verbindungen der Formel (I) verwendet werden.

Durch Zugabe einer metallorganischen Verbindung eines mindestens zweiwertig auftretenden Elements läßt sich die Reaktionsgeschwindigkeit ohne Nachteile für die Polymereigenschaften soweit absenken, daß die Polymerisationswärme auch bei hoher Monomerkonzentration beherrscht werden kann, so daß beispielsweise eine isotherme Polymerisation bei gleichzeitig hoher Raumzeitausbeute möglich ist.

Das Verhältnis des Initiators zum erfindungsgemäßen Metallalkyl oder -aryl hängt von der gewünschten Polymerisationstemperatur und Polymerisationsgeschwindigkeit ab. Das erfindungsgemäße Metallalkyl bzw. -aryl wird z.B. in einem Molverhältnis von 0,5:1 bis 50:1, bevorzugt 1:1 bis 30:1, besonders bevorzugt 1:1 bis 10:1, bezogen auf die Initiatormenge, eingesetzt. Da das Molekulargewicht der Polymeren nicht wie üblicherweise bei der anionischen Polymerisation alleine von der molaren Menge des Initiators abhängt, sondern je nach Art und Menge des erfindungsgemäßen Metallalkyls oder -aryls beeinflußt werden kann, führt man zweckmäßigerweise Vorversuche durch. Verwendet man beispielsweise die Kombination aus Butyllithium als Initiator und Dibutylmagnesium als reaktionsgeschwindikeitssteuernde Komponente, so wählt man zweckmäßigerweise ein Molverhältnis von Li : Mg von 0,02 : 1 bis 2 : 1.

In einer bevorzugten Ausführungsform werden die als Initatoren verwendeten Alkalimetallalkyle zusammen mit den erfindungsgemäßen Metallalkyl- oder -arylverbindungen in einem Kohlenwasserstoff, beispielsweise n-Hexan, n-Heptan oder Cyclohexan als Lösungsmittel gelöst und der ersten Reaktionszone zur Polymerisationsinitiierung zugegeben. Gegebenenfalls kann hierzu ein Lösungsvermittler, beispielsweise Toluol, Ethylbenzol, Xylol oder Diphenylethylen zugegeben werden, um das Ausfallen einer der Komponenten aus dieser Initiatorlösung zu verhindern.

Zur Verhinderung von Wandbelags- und "Popcorn"-Bildung können der Polymerisationsmischung gegebenenfalls auch Gelinhibitoren, wie Kohlenwasserstoffhalogenide, Siliziumhalogenide und 1,2-Diolefine zugesetzt werden. Die eingesetzten Mengen richten sich nach der im Einzelfall eingesetzten Verbindung. Das bevorzugt verwendete 1,2-Butadien setzt man im allgemeinen etwa in Mengen von 100 bis 3000 ppm ein.

Nach erfolgtem Molekulargewichtsaufbau können die "lebenden" Polymerenden mit den für die anionische Polymerisation üblichen Kettenabbruch- oder Kopplungsmittel umgesetzt werden.

Als Kettenabbruchmittel eignen sich protonenaktive Substanzen oder Lewissäuren wie beispielsweise Wasser, Alkohole, aliphatische und aromatische Carbonsäuren sowie anorganische Säuren wie Kohlensäure oder Borsäure.

Zur Kopplung der Kautschuke können mehrfunktionelle Verbindungen wie beispielsweise polyfunktionelle Aldehyde, Ketone, Ester, Anhydride oder Epoxide eingesetzt werden, wodurch man Polydiene mit doppeltem Molekulargewicht bzw. verzweigte oder sternförmige Dienpolymerisate erhält.

Mit dem erfindungsgemäßen Verfahren sind sowohl Homopolymerisate als auch Co- oder Blockcopolymerisate aus Dienen zugänglich. Bevorzugt werden Homo-, Co- und Blockcopolymerisate enthaltend Butadien oder Isopren hergestellt. Besonders bevorzugt sind Polybutadien sowie Butadien-Styrol-Blockcopolymerisate. Die Homo-, Co- und Blockcopolymerisate besitzen bevorzugt Molekulargewichte im Bereich von 10 000 bis 10 000 000 g/mol, besonders bevorzugt 20 000 bis 500 000 g/mol und ganz besonders bevorzugt 50 000 bis 300 000 g/mol, Die Molekulargewichte können duch Art und Menge des Initiators, erfindungsgemäßen Metallalkyls, Temperatur und Umsatz gesteuert werden. Mischungen aus Homo- und Copolymerisaten kann man beispielsweise durch zeitlich versetzte, mehrfache Initatordosierung erhalten.

Die Dien-Blöcke enthalten unter den genannten Reaktionsbedingungen geringe Mengen einpolymerisierter vinylaromatischer Verbindungen, die unsymmetrisch über das Molekül verteilt sind. Ihr Gehalt nimmt mit steigendem Umsatz zu (Hsieh et al, Rubber, Chem. Tech. 1970, 43, 22). Möchte man ein Homopolydien mit möglichst wenig einpolymerisierten vinylaromatischen Monomeren, so bricht man die Polymerisation zweckmäßigerweise schon bei einem Umsatz im Bereich von 35% bis 95%, vorzugsweise von 40 bis 85%, bezogen auf die Diene, ab. Die nicht umgesetzte Dienmonomeren trennt man beispielsweise durch Entspannung ab und kann sie nach Kondensation somit wieder dem Verfahren zurückführen.

Bei einer weiteren Auführungsform des erfindungsgemäßen Verfahrens löst man beispielsweise die Dienmonomeren in der vinylaromatischen Verbindung und polymerisiert in Gegenwart der oben genannten Initiatoren und der die Polymerisation verlangsamenden Metallalkylverbindung bis zum vollständigen Umsatz, bezogen auf die Dienmonomeren. Sobald die Dienmonomeren verbraucht sind, erkennbar (visuell oder mittels einer UV-Sonde) am Farbumschlag der Reaktionslösung von gelb nach rot, kann die Polymerisationsreaktion durch Zugabe der oben genannten Kettenabbruch- oder Kopplungsmittel beendet werden.

Bricht man die Reaktion nicht am Umschlagspunkt, also nach Aufbrauchen der Dienmonomeren, sondern zu einem späteren Zeitpunkt ab, so erhält man einen Block aus vinylaromatischen Monomeren, der sich an den Dienblock anschließt. Auf diese weise erhält man Blockcopolymere oder durch erneute Zugabe von Dienmonomeren oder durch Kopplungsmittel auch Mehrblockcopolymere oder Sternpolymere.

Es ist aber auch möglich die Reaktion, insbesondere im kontinuierlichen Verfahren, zu einem nicht vollständigen Umsatz zu führen, wenn die verbleibenden Monomeren für die beabsichtige Verwendung oder Folgereaktion nicht störend wirken. Im allgemeinen ist aber ein Umsatz von mindestens 70%, bevorzugt von mindestens 80% und ganz besonders bevorzugt ein vollständiger Umsatz gewünscht, falls keine Abtrennung nicht umgesetzter Dienmonomerer vorgesehen ist.

Unter vollständigem Umsatz wird ein Umsatz von mehr als 96 Gew.-% bezogen auf die Dienkomponente verstanden. Hierbei ist der Gehalt an Restmonomeren so niedrig, daß eine anschließende radikalische Reaktion der Reaktionsmischung nicht zu störenden Vernetzungsreaktionen führt. Ein Umsatz von mehr als 100 Gew.% bezogen auf die Dienmonomeren, das bedeutet die Bildung von einem an den Dienblock anschließenden vinylaromatischen Block, kann wünschenswert sein, wenn man ein Dienpolymerisat mit einer gewissen Verträglichkeit mit einer vom Dienpolymerisat verschiedenen Matrix erzielen möchte. Dies kann insbesondere von Bedeutung sein, wenn man die Reaktionsmischung einer anionischen Folgepolymerisation unterwirft, bei der keine Pfropfreaktionen mit dem Dienpolymerisat auftreten. In diesem Fall wird die Polymerisation so weit geführt, daß der Einbau von vinylaromatischen Monomeren im allgemeinen im Bereich von 0,1 bis 100 Gew.-%, bevorzugt von 5 bis 50 Gew.-%, bezogen auf das Dienpolymerisat, liegt.

Eine weitere Verfahrensvariante besteht darin, daß man die Dien-monomeren erst zu einem späteren Zeitpunkt der Reaktionsmischung zugibt, nachdem sich bereits ein Block aus vinylaromatischen Monomeren gebildet hat. Auf diese Weise erhält man beispielsweise Styrol/Butadien-Blockcopolymere. Gibt man gleichzeitig mit den Dienmonomeren auch noch weiteren Initiator zu, so kann man auch Kautschuklösungen in der vinylaromatischen Verbindung, bestehend aus Mischungen von Homodienen und Blockcopolymeren, erhalten, die sich insbsondere für die anschließende, anionische Polymerisation zu schlagzähen Formmassen eignen.

Das erfindungsgemäße Verfahren kann in jedem druck- und temperaturfesten Reaktor durchgeführt werden, wobei es technisch nicht darauf ankommt, ob es sich um rückvermischende oder nicht rückvermischende Reaktoren (d.h. Reaktoren mit Rührkessel- oder Rohrreaktor-Verhalten) handelt. Geeignet sind zum Beispiel Rührkessel, Schlaufenreaktoren sowie Rohrreaktoren oder Rohrbündelreaktoren mit oder ohne Einbauten. Einbauten können statische oder bewegliche Einbauten sein.

Die Umsetzung kann beispielsweise bei einer Temperatur im Bereich von 20°C bis 150°C durchgeführt werden. Bevorzugt ist ein Temperaturbereich von 30°C bis 100°C. Die Reaktionstemperatur kann entweder konstant gehalten werden oder in kontrollierter Weise erhöht oder erniedrigt werden. Zur Erreichung hoher Molekulargewichte Mₙ und enger Molekulargewichtsverteilungen ist es nicht abträglich, wenn sich das Reaktionsgemisch infolge der freiwerdenden Reaktionsenthalpie innerhalb kurzer Zeit erwärmt.

Das erfindungsgemäße Verfahren kann sowohl im Batch- als auch im kontinuierlichen Verfahren eingesetzt werden. Grundsätzlich können die Komponenten der Initiatorzusammensetzung, das Lösungsmittel und die Monomeren in unterschiedlicher Reihenfolge miteinander vermischt werden. Beispielsweise können alle Starterkomponenten vorgelegt werden und Lösungsmittel und Monomerzugabe anschließend erfolgen. Des weiteren können die Komponenten des Initiatorsystems entweder in separaten Lösungen - gleichzeitig oder nacheinander - oder als in einem inerten Lösungsmittel bzw. Lösungsmittelsystem hergestellte Mischung zur Monomerenlösung gegeben werden. Bei dem Batch-Verfahren kann die Monomerenmenge auf einmal, stufenweise oder kontinuierlich zugegeben werden.

Insbesondere bei der kontinuierlichen Verfahrensweise hat es sich als vorteilhaft erwiesen, Initiatorsystem- und Monomerlösung gleichzeitig oder nahezu gleichzeitig, gegebenenfalls unter turbulenten Mischungsverhältnissen, in das Reaktionsgefäß einzuführen. Dazu werden die Monomerlösung sowie die Initiatorlösung z.B. in einer Mischdüse mit geringem Volumen unter turbulenten Strömungsverhältnissen gemischt und anschließend durch ein Rohr mit engem Querschnitt, das mit statischen Mischern ausgerüstet sein kann (z.B. SMX-Mischer der Firma Sulzer), geleitet. Die Strömungsgeschwindigkeit sollte so hoch sein, daß eine relativ einheitliche Verweilzeit beobachtet wird. Die Zugabe eines Zweitmonomeren kann in einer weiteren, nachgeschalteten Mischdüse erfolgen.

Für die kontinuierliche Verfahrensweise können sowohl kontinuierlich betriebene Rührkessel oder Schlaufenreaktoren, als auch Rohrreaktoren oder verschiedene Reaktorkombinationen verwendet werden. Bevorzugt werden bei kontinuierliche Fahrweise Rohrreaktoren, da aufgrund des Verweilzeitspektrums der Reaktionsmasse hierbei einheitlichere Produkt erhalten werden können. Vorteilhaft kann für die kontinuierliche Verfahrensweise auch beispielsweise die Polymerisation in zwei Reaktionszonen sein. Die erste Reaktionszone dient zur Vorpolymerisation und ist als rückvermischende Einheit ausgebildet, die einen Wärmetauscher aufweist. Sie kann beispielsweise als Rührkessel oder auch als Umlaufreaktor mit statischen Mischern ausgeführt sein. Ein hydraulisch befüllter Kreislaufreaktor kann insbesondere bei höheren Viskositäten der Reaktionsmasse vorteilhaft sein. Der gewünschte Umsatz richtet sich im allgemeinen nach der Viskosität der Reaktionsmasse und deren Handhabbarkeit. Er wird zweckmäßigerweise möglichst hoch gewählt, sodaß die Verweilzeit bis zur vollständigen Auspolymerisation der Reaktionsmasse im anschießenden Rohrreaktor möglichst kurz und die maximale Temperatur möglichst gering ist und somit keine Schädigung oder Depolymerisationsreaktionen in nennenswertem Umfang auftreten. Zweckmäßigerweise wird in dieser ersten Reaktionszone bis zu einem Umsatz von 30 bis 80 Gew.-%, vorzugsweise von 40 bis 60 Gew.-% polymerisiert.

Die nach dem erfindungsgemäßen Verfahren erhaltene Dienpolymerisatlösung in einem vinylaromatische Monomeren oder Monomerengemisch ist stippenarm und kann in prinzipiell allen Verfahren eingesetzt werden, bei denen Dienpolymerisatlösungen in vinylaromatischen Verbindungen zum Einsatz kommen, die üblicherweise durch Auflösen des Dienpolymerisates in der vinylaromatischen Verbindung und/oder zusätzlichen Lösungsmitteln und/oder weiterer Monomeren erfolgt. Eine aufwendige Reinigung oder Filtration ist daher in der Regel nicht notwendig. Die Dienpolymerisatlösungen können z.B. nach Kettenabbruch, aber auch ohne diskreten Abbruchschritt, gegebenenfalls nach Zugabe weiterer Monomerer, auch von vinylaromatischen Verbindungen verschiedenen ethylenisch ungesättigten Verbindungen, Losungungsmittel und/oder Initiatoren unmittelbar einer anionischen oder einer thermisch oder durch Radikalstarter initiierten radikalischen Polymerisation unterworfen werden.

Insbesondere eignen sich die Dienpolymerisatlösungen zur Herstellung von vinylaromatische Monomere enthaltende Formmassen wie beispielsweise schlagzähes Polystyrol (HIPS), Acrylnitril-Butadien-Styrol-Polymere (ABS) und Methylmethacrylat-Butadien-Styrol-Copolymere (MBS).

Als Monomere für die Bildung einer Hartmatrix der Formmassen können der Dienpolymerisatlösung neben den oben genannte vinylaromatischen Monomeren weitere ethylenisch ungesättigte Verbindungen, insbesondere aliphacische Vinylverbindungen wie Acrylnitril, Acryl- oder Methacrylester, beispielsweise die Methyl-, Ethyl-, Ethylhexyl- der Cyclohexylester, Maleinsäureester, Maleinsäureanhydrid oder Maleinimid zugesetzt werden.

Als radikalische Initiatoren kommen Peroxide, beispielsweise Diacyl-, Dialkyl- Diarylperoxide, Peroxyester, Peroxidicarbonate, Peroxiketal, Peroxosulfate, Hydroperoxide oder Azoverbindungen in Betracht. Bevorzugt verwendet man Dibenzoylperoxid, 1,1-Di-tert.-butylperoxo-cyclohexan, Dicumylperoxid, Dilaurylperoxid und Azobisisobutyronitril.

Als anionische Initiatoren kommen die für die Dienpolymerisatsynthese oben genannten Alkalimetallalkyle in Betracht.

Als Hilfsmittel können Molekulargewichtsregler wie dimeres α-Methylstyrol, Mercaptane wie n-Dodecylmercaptan oder tert.-Dodecylmercaptan, Kettenverzweigungsmittel, Stabilisatoren, Gleit- oder Schmiermittel zugesetzt werden.

Die Polymerisation der Matrix kann durchgehend in Masse oder in Lösung durchgeführt werden. Die Polymerisation erfolgt in der Regel bei Temperaturen im Bereich von 50 bis 200°C, bevorzugt von 90 bis 150°C im Falle der radikalischen Polymerisation, bzw. von 20 bis 180°C, bevorzugt von 30 bis 80°C im Falle der anionischen Polymerisation. Die Reaktionsführung kann isotherm oder auch adiabatisch erfolgen.

Die erfindungsgemäßen Verfahren bietet den Vorteil, daß sich die Formmassen ohne aufwendigen Wechsel des Reaktionsmediums herstellen lassen. Zudem werden keine oder nur geringe Mengen an Lösungsmitteln benötigt, so daß deren Kosten sowie die Kosten für Reinigung und Aufarbeitung weitgehend entfallen.

In einer besonderen Ausführungsform führt man die Herstellung der Dienpolymerisatlösung und die Polymerisation der Matrix in einem durchgehend kontinuierlichen Verfahren durch. Hierzu polymerisiert man beispielsweise in einer ersten Reaktionszone den für die Bildung der Weichphase erforderliche Dienkautschuk wie oben beschrieben und führt ihn unmittelbar oder nach Zusatz eines Abbruch- oder Kopplungsmittels einer zweiten Reaktionszone zu. In dieser zweiten Reaktionszone können gegebenenfalls weitere vinylaromatische oder olefinische Monomeren in einer Menge, die zur Erreichung der Phaseninversion ausreicht, und gegebenenfalls weitere anionische oder radikalische Initiatoren sowie gegebenfalls Lösungsmittel zugegeben und bis zur Phaseninversion polymerisiert werden. In einer dritten Reaktionszone wird mit soviel vinylaromatischem oder olefinischen Monomer, als zur Bildung der schlagzäh modifizierten thermoplastischen Formmasse erforderlich ist, die Polymerisation anionisch oder radikalisch zu Ende geführt.

Aufgrund des niedrigeren Restmonomerengehaltes polymerisiert man zweckmäßigerweise den Kautschuk in einem Rohrreaktor oder einer Reaktoranordnung mit einem anschließenden Rohrreaktor und überführt die Kautschuklösung kontinuierlich in eine Polymerisationsapparatur, wie sie beispielsweise zur Herstellung von schlagzähem Polystyrol verwendet werden und in A. Echte, Handbuch der technischen Polymerchemie, VCH Verlagsgesellschaft Weinheim 1993, Seiten 484 - 489 beschrieben sind.

Die erhaltenen Formmassen können in üblicher Weise durch Entgaser oder Entgasungsextruder bei Normaldruck oder vermindertem Druck und Temperaturen von 190 bis 320°C von Lösungsmitteln und Restmonomeren befreit werden.

Wird auch die Matrix der kautschukmodifizierten Formmasse durch anionische Polymerisation aufgebaut, so kann es zweckmäßig sein, durch entsprechende Temperaturführung und/oder durch Zusatz von Peroxiden, insbesondere solche mit hoher Zerfallstemperatur wie beispielsweise Dicumylperoxid, eine Vernetzung der Kautschukpartikel zu erreichen.

### Beispiele

### Beispiel 1

In einem 2 l-Rührkessel wurden gleichzeitig innerhalb einer Stunde 920 g Styrol, 80 g Butadien, 50 g Ethylbenzol und eine vorgemischte Katalysatorlösung aus 0,1 ml einer 1 molaren s-Butyllithiumlösung in Cyclohexan und 0,6 ml einer 1 molaren Dibutylmagnesium-Lösung in n-Hexan zugegeben und bei 70°C polymerisiert. Die Reaktionsmischung wurde weiter bei 70 °C gehalten, bis alles Butadien verbraucht war, erkennbar am Farbumschlag der Reaktionslösung von gelb nach rot. Am Umschlagspunkt wurde die Reaktion mit 0,1 ml einer 1 : 1 Methanol/Ethanol-Mischung abgebrochen. Es wurde eine viskose 7,7 %ige Lösung von Polybutadien mit einem Molekulargewicht von Mn = 114 000 in Styrol/Ethylbenzol erhalten.

### Beispiele 2 - 4

Beispiel 1 wurde mit den in Tabelle 1 angegebenen Parametern wiederholt.

### Beispiel 5

In einem 2 l-Rührkessel wurden gleichzeitig innerhalb einer Stunde 920 g Styrol, 80 g Butadien und eine vorgemischte Katalysatorlösung aus 0,1 ml einer 1 molaren s-Butyllithiumlösung in Cyclohexan und 0,6 ml einer 1 molaren Dibutylmagnesium-Lösung in n-Hexan zugegeben und bei 70°C polymerisiert. Die Reaktionsmischung wurde weiter bei 70°C gehalten bis über den Farbumschlag von gelb nach rot hinaus. Bei einem Feststoffgehalt von 9,6 Gew.-% wurde die Reaktion mit 1 ml einer 1 : 1 Methanol/Ethanol-Mischung abgebrochen. Es wurde eine viskose Lösung eines Butadien-Styrol-Blockcopolymeren mit einem Restbutadiengehalt von 1720 ppm und einem Molekulargewicht von Mn = 137 000 erhalten.

### Beispiele 6 - 8

Beispiel 5 wurde mit den in Tabelle 1 angegebenen Parametern wiederholt.

### Beispiel 9

In einen 10 l Rührkessel wurden 5100 g Styrol und 900 g Butadien vorgelegt und auf 70°C erwärmt. Bei dieser Temperatur wurde eine vorgemischte Katalysatorlösung aus 4,3 ml einer 1,4 molaren s-Butyllithiumlösung in Cyclohexan und 9 ml einer 1 molaren Dibutylmagnesium-Lösung in n-Hexan zugegeben. Nach 4,5 h bei dieser Temperatur wurde die Reaktion mit 2 ml Ethanol abgebrochen. Man erhielt eine klare, viskose und stippenfreie Lösung mit einem Feststoffgehalt von 18,1 Gew.-%. Das erhaltene Polymer besaß ein Molakulargewicht von 111 000 g/mol. Die Breite der Verteilung M_{w}/Mₙ betrug 1,20. ¹H-NMR Analyse (CDCl₃; 300 MHz) zeigte einen 1,2-Vinylgehalt des Kautschuks von 10,6 mol-%, bezogen auf den Butadienanteil, und einen Styrolanteil von 25 Gew.-%, bezogen auf das gesamte Polymer. IR-Analyse zeigte ein cis/trans-Verhältnis des Butadienanteils von 1/1,55. Die Glastemperatur des Polymeren betrug -71°C.

### Beispiel 10

In einen 10 l Rührkessel wurden 4250 g Styrol und 750 g Butadien vorgelegt und auf 80°C erwärmt. Bei dieser Temperatur wurde eine vorgemischte Katalysatorlösung aus 3 ml einer 1,4 molaren s-Butyllithiumlösung in Cyclohexan und 5,1 ml einer 1 molaren Dibutylmagnesium-Lösung in n-Hexan zugegeben. Nach 3 h bei dieser Temperatur wurde die Reaktion mit 2 ml Ethanol abgebrochen. Man erhielt eine klare, viskose und stippenfreie Lösung mit einem Feststoffgehalt von 21,4 Gew.-%. Das erhaltene Polymer besaß ein Molekulargewicht von 123 000 g/mol. Die Breite der Verteilung M_{w}/Mₙ betrug 1,66. ¹H-NMR Analyse (CDCl₃; 300 MHz) zeigte einen 1,2-Vinylgehalt des Kautschuks von 11,2 mol-%, bezogen auf den Butadienanteil, und einen Styrolanteil von 44 Gew.-%, bezogen auf das gesamte Polymer. IR-Analyse zeigte ein cis/trans-Verhältnis des Butadienanteils von 1/1,49. DSC-Analyse ergab zwei Glastemperaturen für das Polymere, -67°C und 102°C.

### Vergleichsversuch V1

In einem 2 l-Rührkessel wurden gleichzeitig innerhalb einer Stunde 900 g Styrol, 100 g Butadien und eine Katalysatorlösung aus 0,5 ml einer 1 molaren s-Butyllithiumlösung in Cyclohexan bei 50°C polymerisiert. Die Reaktion ließ sich nur bis zu einem Umsatz von 60 Gew.% bezogen auf das Butadien kontrollieren. Danach stieg die Temperatur innerhalb weniger Minuten stark an und es konnte nur ein stark vernetzter Kautschuk isoliert werden.

### Vergleichsversuch V2

In einem 2 l-Rührkessel wurden gleichzeitig innerhalb einer Stunde 920 g Styrol, 80 g Butadien und eine Katalysatorlösung aus 0,7 ml einer 1 molaren s-Butyllithiumlösung in Cyclohexan bei 30°C polymerisiert. Die Reaktion ließ sich nur bis zu einem Umsatz von 54 Gew.% bezogen auf das Butadien kontrollieren. Danach stieg die Temperatur innerhalb weniger Minuten stark an und es konnte nur ein stark vernetzter Kautschuk isoliert werden.

**Tabelle 1:**

| Herstellung von Butadienpolymerisaten in Styrol | | | | | | | | | | |
|---|---|---|---|---|---|---|---|---|---|---|
| | Beispiel | | | | | | | | | |
| | 1 | 2 | 3 | 4 | 5 | 6 | 7 | 8 | V1 | V2 |
| Styrol [g] | 920 | 920 | 800 | 1000 | 920 | 867 | 920 | 920 | 900 | 920 |
| Butadien [g] | 80 | 100 | 200 | 100 | 80 | 133 | 80 | 80 | 100 | 80 |
| Ethylbenzol [g] | 50 | | | 500 | | | | | | |
| s-BuLi [ml, 1M-Lösung] | 0,1 | 0,1 | 0,2 | 0,2 | 0,1 | 0,13 | 0,1 | 0,1 | 0,5 | 0,7 |
| (Bu)₂Mg [ml, 1M Lösung] | 0,6 | 0,4 | 0,8 | 0,3 | 0,6 | 0,53 | 0,6 | 0,6 | | |
| Feststoffgehalt [%] | 7,7 | 9,8 | 20 | 6,3 | 9,6 | 16 | 9,8 | 11,6 | | |
| Temperatur [°C] | 70 | 60 | 60 | 50 | 70 | 70 | 70 | 70 | 50 | 30 |
| Restmonomeren [ppm] | | | | | 1720 | 1720 | 1680 | 1380 | | |
| Mn [g/mol] *1000 | 114 | 200 | 200 | 200 | 137 | 240 | 140 | 165 | 200 | 114 |

### Beispiel 11 - 14

### Kontinuierliche Herstellung von schlagzähem Polystyrol durch radikalische Polymerisation von Styrol

Für das kontinuierlich durchgeführte Beispiel wurde eine Anordnung aus einem 2 l Rührreaktor (R1) für die Herstellung der Kautschuklösung und einer anschließenden Kessel(R2)-Kessel (R3)-Turm(T1)-Turm(T2)-Anordnung mit 3, 5, 10 und 10 l Reaktorvolumen für Phaseninversion und Herstellung der schlagzäh modifizierten Formmasse verwendet, die über eine Zahnradpumpe miteinander verbunden waren.

In der Anfahrphase wurde nach Beispiel 1 verfahren, bis zum Erreichen des Umschlagpunktes. Danach wurde die Verbindung zur Kessel-Kessel-Turm-Turm-Kaskade hergestellt und die Polybutadienlösung kontinuierlich abgezogen, mit Methanol/Ethanol-Gemisch versetzt und durchmischt und der Kessel-Kessel-Turm-Turm-Kaskade zugeführt. Im Gleichgewichtszustand wurden dem 2l-Rührreaktor R1 stündlich 920 g Styrol, 80 g Butadien, 50 g Ethylbenzol und eine vorgemischte Katalysatorlösung aus 0,1 ml einer 1 molaren s-Butyllithiumlösung in Cyclohexan und 0,6 ml einer 1 molaren Dibutylmagnesium-Lösung in n-Hexan zugegeben und bei 70°C polymerisiert. Im ersten, auf 115°C gehaltenen Kessel (R2) der Kessel-Kessel-Turm-Turm-Anordnung erfolgt unter Zudosierung von stündlich 84 mg Tertiärbutyl-per-2-ethylhexanoat (TBPEH) die Pfropfung des Polybutadien mit Styrol bei einer Rührerdrehzahl von 70 Upm. Die Phaseninversion erfolgte im zweiten, auf 120°C gehaltenen Kessel (R3) mit 120 upm. Die Polymerisation im ersten Turmreaktor (T1) erfolgte bei 135°C und einer Rührerdrehzahl von 70 Upm, im zweiten Turmreaktor (T2) bei 145°C und 40 Upm. Die Feststoffgehalte betrugen im ersten Kessel 13,4 Gew.%, im zweiten Kessel 26,1 Gew.% und am Ausgang des zweiten Turmes 83,7%.

**Tabelle 2:**

| Kontinuierliche Herstellung von schlagzähem Polystyrol durch radikalische Polymerisation von Styrol | | | | |
|---|---|---|---|---|
| | Beispiel | | | |
| | 11 | 12 | 13 | 14 |
| Kautschukherstellung nach Beispiel | 1 | 2 | 3 | 4 |
| Reaktor R2 | 21 | 21 | 21 | 51 |
| TBPEH [mg/h] | 84 | 80 | 70 | 85 |
| Temperaturen [5C] R2/R3/T1/T2 | 115/120/135/145 | 116/125/135/145 | 116/125/135/145 | 115/121/135/145 |
| Rührerdrehzahl [upm] R2/R3/T1/T2 | 70/120/70/40 | 70/120/70/40 | 70/120/70/40 | 70/120/70/40 |
| Feststoffgehalt [Gew.-%] R2/R3/T2 | 13,4/26,1/83,7 | 16,3/29,1/85,8 | 26,5/36,1/86,4 | 12,2/23,1/83,4 |

### Beispiel 15 - 18

### Kontinuierliche Herstellung von schlagzähem Polystyrol durch anionische Polymerisation

Für das kontinuierlich anionisch durchgeführte Beispiel wurde eine Anordnung aus einem 2 l - Rührreaktor (R1) für die Herstellung der Kautschuklösung, einem anschließenden 2 l - Rührkessel (R2) für Phaseninversion und einem Rohrreaktor von 2000 mm Länge und einem Innendurchmesser von 10 mm (Volumen = 0,157 l) verwendet. Die einzelnen Reaktoren waren über Zahnradpumpen miteinander verbunden.

In der Anfahrphase wurde nach Beispiel 5 verfahren, bis zum Feststoffgehalt von 9,6 Gew.%. Danach wurde die Polybutadienlösung kontinuierlich abgezogen, mit Methanol/Ethanol-Gemisch versetzt und durchmischt und dem zweiten Rührreaktor R2 zugeführt. Im Gleichgewichtszustand wurden dem 21-Rührreaktor R1 stündlich 920 g Styrol, 80 g Butadien und eine vorgemischte Katalysatorlösung aus 0,1 ml einer 1 molaren s-Butyllithiumlösung in Cyclohexan und 0,6 ml einer 1 molaren Dibutylmagnesium-Lösung in n-Hexan zugegeben und bei 70°C polymerisiert. Im zweiten auf 70°C gehaltenen Rührkessel R2 wurde stündlich 3,86 mmol/h Dibutylmagnesium (DBM) und 0,52 mmol/h sec.-Butyllithium bei einer Rührerdrehzahl von 70 upm der Blockcopolymerlösung in Styrol zudosiert. Der Feststoffgehalt lag hier bei 35 Gew.%. Im anschließenden Rohrreaktor polymerisierte das Reaktionsgemisch bei 200°C und einer Verweilzeit von 10 Minuten bis zu einem Feststoffgehalt von 97% aus. Das Reaktionsprodukt wurde entgast, verstrangt und granuliert.

**Tabelle 3:**

| kontinuierliche Herstellung von schlagzähem Polystyrol durch anionische Polymerisation | | | | |
|---|---|---|---|---|
| | Beispiel | | | |
| | 15 | 16 | 17 | 18 |
| Kautschukherstellung nach Beispiel | 5 | 6 | 7 | 8 |
| Reaktor R2 | 2 l | 2 l | 7 l | 7 l |
| Ethylbenzol [g/h] | | | 5000 | 2000 |
| s-BuLi [ml, 1M-Lösung] | 0,52 | 0,36 | 4,38 | 5,35 |
| (Bu)₂Mg [ml, IM Lösung] | 3,86 | 3,2 | | |
| Rührerdrehzahl [upm] R2 | 70 | 70 | 70 | 70 |
| Temperatur [°C] R2 | 70 | 40 | 40 | 40 |
| Feststoffgehalt [Gew.-%] R2 | 35 | 35 | 5 | 12 |
| Rohrreaktor R3 (Länge/Innendurchmesser [mm]) | 2000/10 | 2000/10 | 3000/15 | 3000/15 |
| Temperatur [°C] R3 | 200 | 200 | 150 | 150 |
| Verweilzeit [min] R3 | 10 | 10 | 8 | 12 |
| Feststoffgehalt [Gew.-%] R3 | 97 | 98 | 15,5 | 31,5 |
| Polystyrol Mₙ [g/mol] *1000 | 200 | 250 | 200 | 158 |

## Patentansprüche

1. Verfahren zur anionischen Polymerisation von Dienen oder Copolymerisation von Dienen und vinylaromatischen Monomeren in einem vinylaromatischen Monomer oder Monomerengemisch als Lösungsmittel, zu Homopolydienen oder Copolymeren oder gemischten Homopolydienen und Copolymeren, dadurch gekennzeichnet, daß man in Gegenwart eines Alkalimetallalkyls oder -aryls als Initiator und eines Metallalkyls oder -aryls eines mindestens zweiwertig auftretenden Elements ohne Zusatz von Lewisbasen und unter Verwendung von unter 40 Vol.-% eines weiteren Lösungsmittels, bezogen auf das vinylaromatische Monomer oder Monomerengemisch, polymerisiert.

2. Verfahren nach Anspruch 1, dadurch gekennzeichnet, daß man als Metallalkyl oder -aryl eine Verbindung der allgemeinen Formel (I)
RₙM (I)
einsetzt, wobei
M ein Element der zweiten oder dritten Hauptgruppe oder der zweiten Nebengruppe des Periodensystems,
R unabhängig voneinander Wasserstoff, Halogen, C₁-C₂₀-Alkyl oder C₆-C₂₀-Aryl und
n 2 oder 3, entsprechend der Wertigkeit des Elementes M bedeuten.

3. Verfahren nach den Ansprüchen 1 oder 2, dadurch gekennzeichnet, daß man als Metallalkyl Diethylzink, Butylethylmagnesium, Dibutylmagnesium, Dihexylmagnesium, Butyloctylmagnesium, Triisobutylaluminium, Trihexylaluminium, Triethylaluminium, Trimethylaluminium, Diethylaluminiumchlorid oder Diethylaluminiumhydrid einsetzt.

4. Verfahren nach den Ansprüchen 1 bis 3, dadurch gekennzeichnet, daß man das Metallalkyl oder -aryl im Molverhältnis von 0,5/1 bis 50/1, bezogen auf die Initiatormenge, einsetzt.

5. Verfahren nach den Ansprüchen 1 bis 4, dadurch gekennzeichnet, daß man als weiteres Lösungsmittel einen aliphatischen, cycloaliphatischen oder aromatischen Kohlenwasserstoff oder Mischungen davon verwendet.

6. Verfahren nach den Ansprüchen 1 bis 5, dadurch gekennzeichnet, daß man als Diene Butadien oder Isopren einsetzt.

7. Verfahren nach den Ansprüchen 1 bis 6, dadurch gekennzeichnet, daß man als vinylaromatische Monomere Styrol, α-Methylstyrol, p-Methylstyrol, 1,1-Diphenylethylen oder deren Mischungen einsetzt.

8. Verfahren nach Ansprüchen 1 bis 7, dadurch gekennzeichnet, daß man die Polymerisation mit einem Kettenabbruch- oder Kopplungsmittel beendet.

9. Verwendung einer nach einem der Ansprüche 1 bis 8 hergestellten Dienpolymerisatlösung zur Herstellung von schlagzähem Polystyrol, Acrylnitril-Butadien-Styrol-Polymeren und Methylmethacrylat-Butadien-Styrol-Copolymeren.

10. Verfahren zur kontinuierlichen Herstellung von schlagzäh modifizierten, thermoplastischen Formmassen, die eine Weichphase aus einem Dienpolymerisat dispers verteilt in einer vinylaromatischen Hartmatrix enthalten, dadurch gekennzeichnet, daß
- in einer ersten Reaktionszone das für die Bildung der Weichphase erforderliche Dienpolymerisat gemäß Anspruch 1 hergestellt wird,
- das so erhaltene Dienpolymerisat unmittelbar oder nach Zusatz eines Abbruch- oder Kopplungsmittels einer zweiten Reaktionszone zugeführt wird, in der gegebenenfalls unter Zugabe weiterer Vinylmonomeren in einer Menge, die zur Erreichung der Phaseninversion ausreicht, und gegebenenfalls weiteren Initiatoren und/oder Lösungsmittel bis zur Phaseninversion anionisch oder radikalisch polymerisiert wird und
- in einer dritten Reaktionszone mit soviel vinylaromatischem Monomer, als zur Bildung der schlagzäh modifizierten thermoplastischen Formmasse erforderlich ist, die Polymerisation anionisch oder radikalisch zu Ende geführt wird.

## Claims

1. A process for the anionic polymerization of dienes or copolymerization of dienes and vinylaromatic monomers in a vinylaromatic monomer or monomer mixture as solvent to give homopolydienes or copolymers or mixed homopolydienes and copolymers, wherein the polymerization is carried out in the presence of an alkali metal alkyl or aryl as initiator and of a metal alkyl or aryl of an element having a valence of at least two without addition of Lewis bases and using less than 40 % by volume of a further solvent, based on the vinyl aromatic monomer or monomer mixture.

2. A process as claimed in claim 1, wherein the metal alkyl or aryl used is a compound of the formula (I)
RₙM (I)
where
M is an element of main group II or III or transition group II of the Periodic Table,
R are, independently of one another, hydrogen, halogen, C₁-C₂₀-alkyl or C₆-C₂₀-aryl and
n is 2 or 3, corresponding to the valence of the element M.

3. A process as claimed in claim 1 or 2, wherein the metal alkyl used is diethylzinc, butylethylmagnesium, dibutylmagnesium, dihexylmagnesium, butyloctylmagnesium, triisobutylaluminum, trihexylaluminum, triethylaluminum, trimethylaluminum, diethylaluminum chloride or diethylaluminum hydride.

4. A process as claimed in any of claims 1 to 3, wherein the metal alkyl or aryl is used in a molar ratio of from 0.5/1 to 50/1, based on the amount of initiator.

5. A process as claimed in any of claims 1 to 4, wherein the further solvent used is an aliphatic, cycloaliphatic or aromatic hydrocarbon or a mixture thereof.

6. A process as claimed in any of claims 1 to 5, wherein the diene used is butadiene or isoprene.

7. A process as claimed in any of claims 1 to 6, wherein the vinylaromatic monomer used is styrene, α-methylstyrene, p-methylstyrene, 1,1-diphenylethylene or a mixture thereof.

8. A process as claimed in any of claims 1 to 7, wherein the polymerization is stopped using a chain termination agent or coupling agent.

9. The use of a diene polymer solution prepared as claimed in any of claims 1 to 8 for preparing high-impact polystyrene, acrylonitrile-butadiene-styrene polymers and methyl methacrylate-butadiene-styrene copolymers.

10. A process for the continuous preparation of impact-modified, thermoplastic molding compositions which comprise a soft phase comprising a diene polymer dispersed in a hard vinylaromatic matrix, which comprises
- preparing, as claimed in claim 1, the diene polymer required for the formation of the soft phase in a first reaction zone,
- feeding the diene polymer obtained in this way, either directly or after addition of a termination or coupling agent, to a second reaction zone in which, if desired with addition of further vinyl monomers in an amount which is sufficient to achieve phase inversion and, if desired, further initiators and/or solvents, anionic or free-radical polymerization is carried out until phase inversion occurs and
- in a third reaction zone, anionic or free-radical polymerization is continued until complete with the amount of vinylaromatic monomer required to form the impact-modified thermoplastic molding composition.

## Revendications

1. Procédé pour la polymérisation anionique de diènes ou la copolymérisation de diènes et de monomères aromatiques vinyliques dans un monomère aromatique vinylique ou un mélange de monomères aromatiques vinyliques comme solvant, en homopolydiènes ou en copolymères ou en homopolydiènes et copolymères mélangés, caractérisé en ce qu'on polymérise, en présence d'un alkyle de métal alcalin ou d'un aryle de métal alcalin comme initiateur et d'un alkyle métallique ou d'une aryle métallique d'un élément au moins bivalent sans addition de bases de Lewis et en utilisant moins de 40 % en volume d'un autre solvant, par rapport aux monomères aromatiques vinyliques ou au mélange de monomères aromatiques vinyliques.

2. Procédé selon la revendication 1, caractérisé en ce qu'on utilise un alkyle métallique ou un aryle métallique un composé de formule générale (I)
RₙM (I),
où
M représente un élément du deuxième ou troisième groupe principal ou du deuxième groupe secondaire du système périodique,
R représente, indépendamment l'un de l'autre, de l'hydrogène, de l'halogène, un groupe alkyle en C₁ à C₂₀ ou un groupe aryle en C₆ à C₂₀, et
n représente 2 ou 3, en fonction de la valence de l'élément M.

3. Procédé selon les revendications 1 ou 2, caractérisé en ce qu'on utilise comme alkyle métallique du diéthylzinc, du butyléthylmagnésium, du dibutylmagnésium, du dihexylmagnésium, du butyloctylmagnésium, du triisobutylaluminium, du trihexylaluminium, du triéthylaluminium, du triméthylaluminium, du chlorure de diéthylaluminium ou de l'hydrure de diéthylaluminium.

4. Procédé selon les revendications 1 à 3, caractérisé en ce qu'on utilise l'alkyle métallique ou l'aryle métallique dans un rapport molaire de 0,5/1 à 50/1, par rapport à la quantité d'initiateur.

5. Procédé selon les revendications 1 à 4, caractérisé en ce qu'on utilise comme autre solvant un hydrocarbure aliphatique, cycloaliphatique ou aromatique ou des mélanges de ceux-ci.

6. Procédé selon les revendications 1 à 5, caractérisé en ce qu'on utilise comme diène du butadiène ou de l'isoprène.

7. Procédé selon les revendications 1 à 6, caractérisé en ce qu'on utilise comme monomères aromatiques vinyliques du styrène, de l'α-méthylstyrène, du p-méthylstyrène, du 1,1-diphényléthylène ou leurs mélanges.

8. Procédé selon les revendications 1 à 7, caractérisé en ce qu'on termine la polymérisation par un agent d'interruption de la chaîne ou un agent d'accouplement.

9. Utilisation d'une solution polymère diénique préparée selon l'une quelconque des revendications 1 à 8 pour la préparation de polystyrène à résistance élevée aux chocs, de polymères d'acrylonitrile - butadiène - styrène à résistance élevée aux chocs et de copolymères de méthacrylate de méthyle - butadiène - styrène à résistance élevée aux chocs.

10. Procédé pour la préparation en continu de masses moulées thermoplastiques modifiées à résistance élevée aux chocs, qui contiennent une phase molle d'un polymère diénique, répartie de manière dispersée dans une matrice dure aromatique vinylique, caractérisé
- en ce qu'on prépare dans une première zone de réaction le polymère diénique nécessaire pour la formation de la phase molle, comme décrit dans revendication 1,
- en ce qu'on introduit le polymère diénique ainsi obtenu, directement ou après addition d'un agent d'interruption ou d'accouplement, dans une deuxième zone de réaction, dans laquelle on polymérise par voie anionique ou radicalaire, le cas échéant en ajoutant d'autres monomères vinyliques en une quantité qui suffit pour atteindre l'inversion de phase et, le cas échéant, d'autres initiateurs et/ou solvants jusqu'à l'inversion des phases et
- en ce qu'on conduit la polymérisation jusqu'à la fin par voie anionique ou radicalaire dans une troisième zone de réaction avec la quantité de monomères aromatiques vinyliques nécessaires pour former la masse moulée thermoplastique modifiée à résistance élevée aux chocs.
